# EUROPEAN PATENT APPLICATION

(11) **EP 4 243 158 A1**
(43) Date of publication of application: **13.09.2023**
(21) Application number: 22790436.4
(22) Date of filing: 02.06.2022
(51) Int. Cl.: H01M 10/655, H01M 10/613, H01M 10/6563

(54) **BATTERY AND ELECTRIC DEVICE**

(30) Priority: 12.01.2022 CN 202220076160 U
(71) Applicant: Contemporary Amperex Technology Co., Limited, Ningde, Fujian 352100 (CN)
(72) Inventor: LIN, Zhuangzhuang, Ningde City, Fujian 352100 (CN); HUANG, Yangzhi, Ningde City, Fujian 352100 (CN); JI, Jinqing, Ningde City, Fujian 352100 (CN); LIU, Jianhua, Ningde City, Fujian 352100 (CN); WU, Yuanzhan, Ningde City, Fujian 352100 (CN)
(74) Representative: Gong, Jinping
(86) International application number: PCT/CN2022/096925
(87) International publication number: WO 2023/134107

(57) **Abstract**

The present application provides a battery (10) and powered equipment with good heat dissipation performance. The battery (10) includes: a plurality of battery cells (20), the plurality of battery cells (20) being cylinders; and an air-cooling structure (30), including a body (31) and at least one air duct (32) penetrating the body (31) in a first direction (X), the first direction (X) being parallel to an axial direction of the plurality of battery cells (20), and a cross section of the air duct (32) perpendicular to the first direction (X) being in a fin shape.

## Description

The present application claims the priority of the patent application with the application number 202220076160.4 and entitled "Battery and Powered equipment" filed to the China Patent Office on January 12, 2022, the entire contents of which are incorporated herein by reference.

### Technical Field

The present application relates to the technical field of batteries, and in particular, to a battery, and powered equipment.

### Background Art

Due to the advantages of high energy density, recyclable charging, safety and environmental protection, power batteries are widely used in the fields of new energy vehicles, consumer electronics, energy storage systems and the like.

However, the power batteries will generate heat during use, which will affect the performance of the power batteries and even cause serious safety problems. In order to ensure the normal use of the power batteries, it is necessary to dissipate heat for the power batteries.

### Summary of the Invention

The present application provides a battery and powered equipment with good heat dissipation performance.

In a first aspect, a battery is provided, including:
a plurality of battery cells, the plurality of battery cells being cylinders; and
an air-cooling structure, including a body and at least one air duct penetrating the body in a first direction, the first direction being parallel to an axial direction of the plurality of battery cells, and a cross section of the air duct perpendicular to the first direction being in a fin shape.

Based on this technical solution, the battery adopts the air-cooling structure. The air-cooling structure includes the body and the air duct penetrating the body along the axial direction of the battery cells. Air introduced into the air duct can take away heat generated by the plurality of battery cells, and good heat dissipation performance is achieved. Since the cross section of the air duct perpendicular to the first direction is in the fin shape, the fin-shaped air duct cross section shape can have both heat dissipation efficiency and process feasibility at the same time, which not only enlarges a heat exchange area between the air-cooling structure and the battery cells, but also ensures the process feasibility.

In a possible implementation, the plurality of battery cells are arranged around the air-cooling structure. By arranging the plurality of cylindrical battery cells around the air-cooling structure, heat of each battery cell can be effectively taken away by the air introduced into the air duct, thereby improving the overall heat dissipation efficiency.

In a possible implementation, the plurality of battery cells are pasted on a first surface of the body away from the air duct by means of a thermally conductive structural adhesive.

The thermally conductive structural adhesive is used to realize the connection between the battery cells and the air-cooling structure. In addition, since the thermally conductive structural adhesive has good thermal conductivity, by pasting the plurality of battery cells on the first surface surrounding the air duct by means of the thermally conductive structural adhesive, it is beneficial to conducting the heat generated by the plurality of battery cells to the air duct, which further improves the heat dissipation efficiency.

In a possible implementation, a contour shape of a region on the first surface to which the plurality of battery cells are pasted matches a contour shape of surfaces of the plurality of battery cells. Therefore, the heat dissipation area of the plurality of battery cells is enlarged, and the heat dissipation efficiency is further improved.

In a possible implementation, the air-cooling structure further includes a fan, and the fan is configured to ventilate the air duct, so as to discharge the heat generated by the plurality of battery cells. The fan can increase the air speed in the air duct, thereby improving the heat dissipation efficiency of the battery cells.

In a possible implementation, the battery further includes a box body, the box body includes a first box body portion and a second box body portion, the first box body portion and the second box body portion are buckled to form an accommodating cavity for accommodating the air-cooling structure and the plurality of battery cells, at least one of the first box body portion and the second box body portion has an opening, and a plane where the opening is located is parallel to the first direction.

The box body is arranged to be formed by the first box body portion and the second box body portion in a buckled mode, which facilitates the assembly of the air-cooling structure and the plurality of battery cells in the box body.

In a possible implementation, a first heat dissipation portion is arranged on a bottom wall of the first box body portion, and a contour shape of a region on the first heat dissipation portion in contact with the plurality of battery cells matches a contour shape of surfaces of the plurality of battery cells.

The first heat dissipation portion may be a part of the bottom wall of the first box body portion, or may be a structure that is relatively independent from the bottom wall of the first box body portion. The first heat dissipation portion is of a profiling design, and the contour shape of the region on the first heat dissipation portion in contact with the plurality of battery cells is designed to match the contour shape of the surfaces of the plurality of battery cells, so that the heat dissipation area of the plurality of battery cells is enlarged, and the heat dissipation efficiency is further improved.

In a possible implementation, a second heat dissipation portion is arranged on a bottom wall of the second box body portion, and a contour shape of a region on the second heat dissipation portion in contact with the plurality of battery cells matches the contour shape of surfaces of the plurality of battery cells.

The second heat dissipation portion may be a part of the bottom wall of the second box body portion, or may be a structure that is relatively independent from the bottom wall of the second box body portion. The second heat dissipation portion is of a profiling design, and the contour shape of the region on the second heat dissipation portion in contact with the plurality of battery cells is designed to match the contour shape of the surfaces of the plurality of battery cells, so that the heat dissipation area of the plurality of battery cells is enlarged, and the heat dissipation efficiency is further improved.

In a possible implementation, the air-cooling structure is formed by a die-casting process, the process is simple, and the reliability is high.

In a second aspect, powered equipment is provided, including the battery described in the first aspect or any possible implementation of the first aspect, wherein the battery is configured to provide electrical energy to the powered equipment.

It can be seen that the battery adopts the air-cooling structure. The air-cooling structure includes the body and the air duct penetrating the body along the axial direction of the battery cells. The air introduced into the air duct can take away heat generated by the plurality of battery cells. Since the cross section of the air duct perpendicular to the first direction is in the fin shape, the fin-shaped air duct cross section shape can have both heat dissipation efficiency and process feasibility at the same time, which not only enlarges a heat exchange area between the air-cooling structure and the battery cells, but also ensures the process feasibility.

In a third aspect, a method for manufacturing a battery is provided, including: providing a plurality of battery cells, the plurality of battery cells being cylinders; providing an air-cooling structure, the air-cooling structure including a body and at least one air duct penetrating the body; and arranging the at least one air duct along a first direction X, the first direction X being parallel to an axial direction of the plurality of battery cells, and a cross section of the air duct perpendicular to the first direction X is in a fin shape.

An example of the present application further provides a device for manufacturing a battery, including: a first providing module configured to provide a plurality of battery cells, the plurality of battery cells being cylinders; a second providing module configured to provide an air-cooling structure, the air-cooling structure including a body and at least one air duct penetrating the body; and an assembling module configured to arrange the at least one air duct along a first direction X, the first direction X being parallel to an axial direction of the plurality of battery cells, and a cross section of the air duct perpendicular to the first direction X is in a fin shape.

### Description of Drawings

In order to illustrate the technical solutions of the examples of the present application more clearly, the drawings required in the examples of the present application will be briefly introduced below. Obviously, the drawings described below are only some examples of the present application. For those of ordinary skill in the art, other drawings can also be obtained according to the drawings without any creative effort.
Fig. 1 is a schematic structural view of a vehicle to which an example of the present application may apply;
Fig. 2 is a schematic structural view of a battery according to an example of the present application;
Fig. 3 is a schematic cross-sectional view of a battery according to an example of the present application;
Fig. 4 is a schematic view of heat dissipation of a battery according to an example of the present application;
Fig. 5 is a schematic structural view of a cover plate of an air-cooling structure of a battery according to an example of the present application;
Fig. 6 is an exploded view of a battery according to an example of the present application;
Fig. 7 is a schematic cross-sectional view of a battery at an air outlet according to an example of the present application;
Fig. 8 is a schematic cross-sectional view of a battery at an air inlet according to an example of the present application;
Fig. 9 is a schematic flow chart of a method for manufacturing a battery according to an example of the present application;
Fig. 10 is a schematic block diagram of a device for manufacturing a battery according to an example of the present application.

In the drawings, the drawings are not drawn to actual scale.

### Detailed Description

Embodiments of the present application are described in further detail below in conjunction with the accompanying drawings and examples. The following detailed description of the examples and the accompanying drawings are used to illustrate the principles of the present application by way of example, but should not be used to limit the scope of the present application, that is, the present application is not limited to the described examples.

In the description of the present application, it should be noted that, unless otherwise stated, "plurality of' means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Vertical" is not strictly vertical, but within the allowable range of errors. "Parellel" is not strictly parallel, but within the allowable range of errors.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application can be understood according to specific situations.

In the present application, the term "and/or" is only an association relationship for describing associated objects, indicating that three relationships may exist. For example, A and/or B indicates that there are three cases of A alone, A and B together, and B alone. In addition, the character "/" in the present application generally means that associated objects before and after it are in an "or" relationship.

Unless otherwise defined, all technical and scientific terms used in the present application have the same meaning as commonly understood by those skilled in the art to which the present application belongs; the terms used in the specification of the present application are for the purpose of describing specific examples only, and are not intended to limit the present application; the terms "including" and "having" and any variations thereof in the specification and claims of the present application as well as in the above description of drawings are intended to cover a non-exclusive inclusion. The terms "first", "second" and the like in the specification and claims of the present application or the above drawings are used to distinguish different objects, rather than to describe a specific order or primary and secondary relationship.

Reference in the present application to "an example" means that a particular feature, structure, or characteristic described in connection with the example can be included in at least one example of the present application. The appearance of this phrase in various places in the specification does not necessarily refer to the same example, nor is it a separate or alternative example that is mutually exclusive with other examples. It is understood explicitly and implicitly by those skilled in the art that the examples described in the present application can be combined with other examples.

While the present application has been described with reference to the preferred examples, various modifications may be made and components therein may be replaced with equivalents without departing from the scope of the present application. In particular, the technical features mentioned in the various examples can be combined in any manner provided that there is no structural conflict. The present application is not limited to the specific examples disclosed herein, but rather includes all technical solutions falling within the scope of the claims.

In the present application, a battery cell may include a lithium-ion secondary battery, a lithium-ion primary battery, a lithium-sulfur battery, a sodium/lithium ion battery, a sodium-ion battery, or a magnesium-ion battery, or the like. Generally, a battery cell may also be called a battery cell. The battery cell may be cylindrical, flat, rectangular, or in other regular or irregular shapes. The technical solutions of examples of the present application may be applied to battery cells in any shape, and in particular, are suitable for cylindrical battery cells and to dissipate heat for the cylindrical battery cells.

A battery mentioned in the present application refers to a single physical module that includes one or more battery cells to provide higher voltage and capacity. For example, the battery mentioned in the present application may include a battery module or a battery pack, or the like. The battery typically includes a box body for encapsulating one or more battery cells. The box body can prevent liquids or other foreign matters from affecting charging or discharging of the battery cells.

The battery cells include electrode assemblies and electrolyte solutions, and each electrode assembly is composed of a positive electrode sheet, a negative electrode sheet and a separator. The battery cells work mainly relying on the movement of metal ions between the positive electrode sheet and the negative electrode sheet. The positive electrode sheet includes a positive current collector and a positive electrode active material layer, a surface of the positive current collector is coated with the positive electrode active material layer, the positive current collector not coated with the positive electrode active material layer protrudes from the positive electrode collector already coated with the positive electrode active material layer, and the positive current collector not coated with the positive electrode active material layer is used as a positive electrode tab. Taking a lithium-ion battery as an example, a material of the positive current collector may be aluminum, and a positive electrode active material may be lithium cobalt oxide, lithium iron phosphate, ternary lithium, or lithium manganate. The negative electrode sheet includes a negative current collector and a negative electrode active material layer, a surface of the negative current collector is coated with the negative electrode active material layer, the negative current collector not coated with the negative electrode active material layer protrudes from the negative electrode collector already coated with the negative electrode active material layer, and the negative current collector not coated with the negative electrode active material layer is used as a negative electrode tab. A material of the negative current collector may be copper, and a negative electrode active material may be carbon or silicon. In order to ensure that a large current passes without fusing, a plurality of positive electrode tabs are laminated together, and a plurality of negative electrode tabs are laminated together. A material of the separator may be polypropylene (PP) or polyethylene (PE). In addition, the electrode assembly may be of a wound structure or a laminated structure, and the present application is not limited thereto.

In the box body of the battery, a signal transmission assembly may also be included. The signal transmission assembly is configured to transmit signals such as a voltage and/or a temperature of the battery cells. The signal transmission assembly may include a bus component, and the bus component is configured to realize electrical connection between the plurality of battery cells, such as parallel connection, series connection or series-parallel connection. The bus component may realize electrical connection between the battery cells by connecting electrode terminals of the battery cells. In some examples, the bus component may be fixed to the electrode terminals of the battery cells by welding. The bus component transmits the voltage of the battery cells, and a higher voltage will be obtained after the plurality of battery cells are connected in series. Correspondingly, the electrical connection formed by the bus component may also be called "high voltage connection".

In addition to the bus component, the signal transmission assembly may also include a sensing device for sensing the state of the battery cells, for example, the sensing device may be configured to measure and transmit sensing signals such as a temperature and a state of charge of the battery cells. In the present application, an electrical connection member within the battery may include the bus component and/or the sensing device.

The bus component and sensing device may be encapsulated in an insulating layer to form the signal transmission assembly. Accordingly, the signal transmission assembly may be configured to transmit a voltage and/or sensing signal of the battery cells. The signal transmission assembly has no insulating layer at junctions with the electrode terminals of the battery cells, i.e., the insulating layer has openings here to be connected with the electrode terminals of the battery cells.

The development of the battery technology needs to consider many design factors at the same time, such as energy density, cycle life, discharge capacity, charge-discharge rate and other performance parameters. In addition, the safety of the battery also needs to be considered.

Since a power battery will continuously generate heat during use, when the heat is too high, it may cause serious safety problems. In order to ensure the safety of the power battery, it is necessary to dissipate heat for the power battery.

In view of this, the present application provides a technical solution, by arranging an air-cooling structure and arranging a plurality of battery cells around the air-cooling structure, the heat of the battery cells can be effectively taken away by air introduced into an air duct, and good heat dissipation performance is achieved.

The technical solutions described in the present application are applicable to various powered equipment using batteries, such as vehicles, mobile phones, portable devices, labtops, ships, spacecraft, electric toys, electric tools, and so on. The vehicles may be fuel vehicles, gas vehicles or new energy vehicles, and the new energy vehicles may be all-electric vehicles, hybrid vehicles or extended-range electric vehicles, etc.; the spacecraft include airplanes, rockets, space shuttles, space ships, etc.; the electric toys include fixed or mobile electric toys, such as game consoles, electric car toys, electric ship toys, electric airplane toys, etc.; and the electric tools include metal cutting electric tools, grinding electric tools, assembling electric tools and railway electric tools, such as, electric drills, electric grinders, electric wrenches, electric screwdrivers, electric hammers, electric impact drills, concrete vibrators, electric planers, etc.

Hereinafter, for convenience of description, the powered equipment being a vehicle is taken as an example for description.

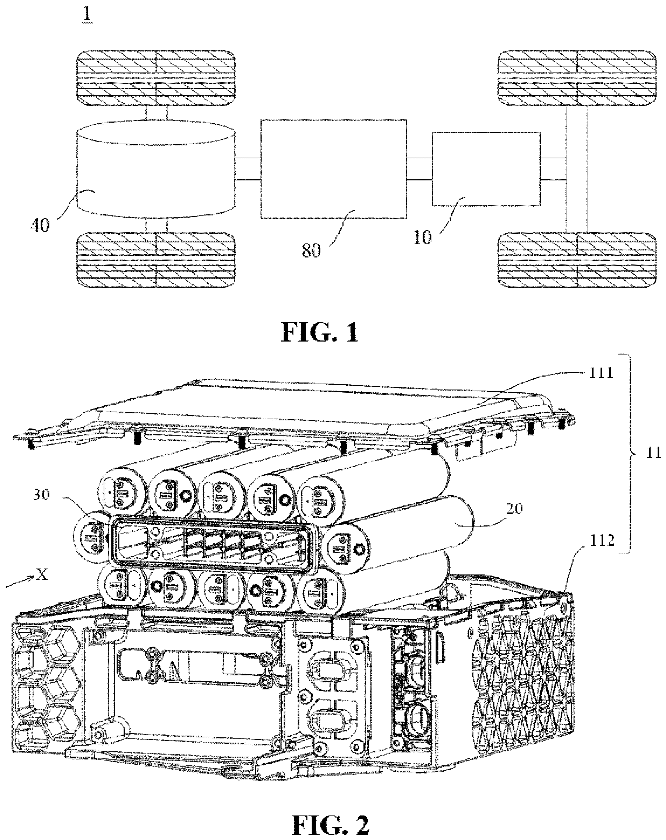

For example, as shown in Fig. 1, which is a schematic structural view of a vehicle 1 to which an example of the present application may be applied, the vehicle 1 may be a fuel vehicle, a gas vehicle, or a new energy vehicle, and the new energy vehicle may be an all-electric vehicle, a hybrid vehicle, or an extended-range electric vehicle. The interior of the vehicle 1 may be provided with a motor 40, a controller 80 and a battery 10, and the controller 80 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In some examples, the battery 10 may not only be used as the operating power source of the vehicle 1, but also may be used as a driving power source of the vehicle 1 to provide driving power for the vehicle 1 in place of or partially in place of fuel or natural gas.

In order to meet different power usage requirements, the battery 10 may include a plurality of battery cells, for example, a plurality of cylindrical battery cells. The plurality of battery cells may be connected in series, in parallel or in series and parallel, and series-parallel connection refers to the mixture of series connection and parallel connection. The battery may also be called a battery pack. In some examples, the plurality of battery cells may be connected in series, in parallel or in series and parallel to form battery modules first, and then the plurality of battery modules may be connected in series, in parallel or in series and parallel to form the battery 10. That is to say, the plurality of battery cells may directly form the battery 10, or may form the battery modules first, and then the battery modules form the battery 10.

For example, as shown in Fig. 2, Fig. 2 is a schematic structural view of a battery 10 according to an example of the present application. The battery 10 may include a plurality of battery cells 20. In addition to the battery cells 20, the battery 10 may further include a box body 11 (or a cover body), the interior of the box body 11 is of a hollow structure, and the plurality of battery cells 20 may be accommodated in the box body 11. As shown in Fig. 2, the box body 11 may include two parts, which are referred to as a first box body portion 111 and a second box body portion 112 respectively, and the first box body portion 111 and the second box body portion 112 are buckled together. The shapes of the first box body portion 111 and the second box body portion 112 may be determined according to the combined shape of the plurality of battery cells 20, and at least one of the first box body portion 111 and the second box body portion 112 has an opening. For example, both the first box body portion 111 and the second box body portion 112 may be hollow rectangular solids and each has only one surface being an opening surface, the opening of the first box body portion 111 and the opening of the second box body portion 112 are disposed opposite to each other, and the first box body portion 111 and the second box body portion 112 are buckled together to form the box body 11 having a closed cavity. For another example, only one of the first portion 111 and the second portion 112 may be a hollow rectangular solid with an opening, and the other may be in a plate shape to cover the opening. According to different power requirements, the number of the battery cells 20 may be set to any value. The plurality of battery cells 20 may be connected in series, in parallel or in series and parallel to achieve larger capacity or power. The plurality of battery cells 20 are assembled in parallel, in series or in series and parallel, and then placed in the box body 11 formed by buckling the first box body portion 111 and the second box body portion 112 together.

In some examples, the battery 10 may also include other structures, which will not be repeated here. For example, the battery 10 may further include a bus component, and the bus component is configured to realize electrical connection between the plurality of battery cells 20. Specifically, the bus component may realize electrical connection between the battery cells 20 by connecting electrode terminals of the battery cells 20. In some examples, the bus component may be fixed to the electrode terminals of the battery cells 20 by welding. Electric energy of the plurality of battery cells 20 may be further led out through a conductive mechanism penetrating the box body. The conductive mechanism may also belong to the bus component.

For convenience of description, the following description mainly takes the cylindrical battery cells 20 shown in Fig. 2 as an example.

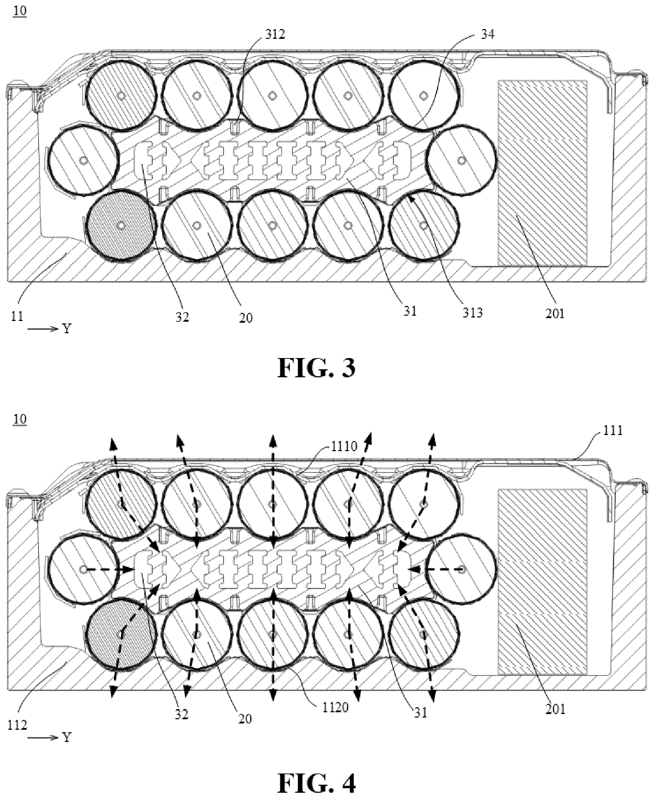

Fig. 3 is a schematic structural view of the battery 10 according to an example of the present application. As shown in Figs. 2 and 3, the battery 10 includes an air-cooling structure 30 and the plurality of battery cells 20. The plurality of battery cells 20 are cylinders.

The air-cooling structure 30 includes a body 31 and at least one air duct 32 penetrating the body 31 in a first direction X, the first direction X is parallel to an axial direction of the plurality of battery cells 20, and a cross section of the air duct 32 perpendicular to the first direction X is in a fin shape.

As shown in Figs. 2 and 3, when air is introduced into the air duct 32, the air may take away heat generated by the plurality of battery cells 20 surrounding the air-cooling structure 30. The shape of the cross section of the air duct 32 perpendicular to the first direction X is related to the heat dissipation efficiency of the battery cells 20. The larger the cross-sectional area of the air duct 32, the higher the heat dissipation efficiency, but the more complicated a manufacturing process thereof. Under the condition of ensuring the process feasibility, the cross section shape of the air duct 32 may be optimized by means of, for example, thermal simulation.

In the example of the present application, the cross section of the air duct 32 perpendicular to the first direction X is in the fin shape. For the air-cooling structure 30 formed by a die-casting process, the use of the fin-shaped air duct cross section shape can have both heat dissipation efficiency and process feasibility, which not only enlarges a heat exchange area between the air-cooling structure 30 and the battery cells 20, but also has the feasibility of the die-casting process.

The air-cooling structure 30 may be formed by, for example, the die-casting process, the process is simple, and the reliability is high.

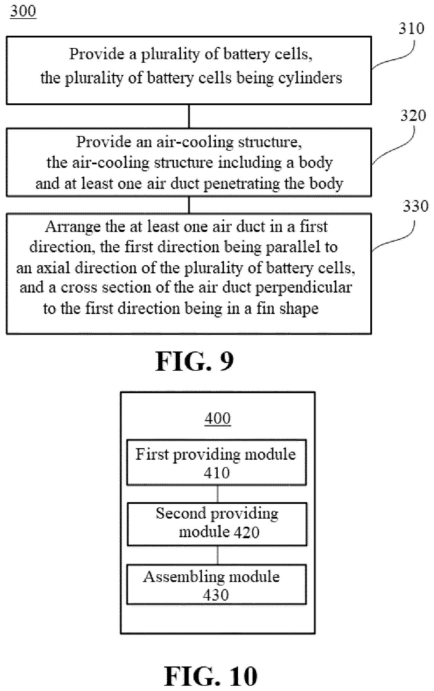

The present application does not limit the number and position of the air duct 32. In Fig. 3, 10 air ducts are used as an example, and the 10 air ducts are arranged along a second direction Y, and the second direction Y is perpendicular to the first direction X. The cross section of each air duct 32 perpendicular to the first direction X is in a fin shape. For example, the fin shape may be a shape similar to the letter "E", see the leftmost three air ducts 32 and the rightmost three air ducts 32 in the 10 air ducts arranged along the second direction Y in Fig. 3; and for another example, the fin shape may also be a shape similar to the Chinese character "wang" formed by two opposite "E", see the middle four air ducts 32 in the 10 air ducts arranged along the second direction in Fig. 3.

It can be seen that, the battery 10 adopts the air-cooling structure 30. The air-cooling structure 30 includes the body 31 and the air ducts 32 penetrating the body 31 along the axial direction, i.e., the first direction X, of the battery cells 20. The air introduced into the air ducts 32 can take away heat generated by the plurality of battery cells 20, and good heat dissipation performance is achieved, so that the battery 10 has high safety. Since the cross sections of the air ducts 32 perpendicular to the first direction X are in the fin shape, the fin-shaped air duct cross section shapes can have both heat dissipation efficiency and process feasibility at the same time, which not only enlarges the heat exchange area between the air-cooling structure and the battery cells, but also ensures the process feasibility.

Fig. 3 shows the position of a printed circuit board assembly (PCBA) 201 of a battery management system (BMS) in the box body 11, and its specific structure is not shown in Fig. 3 for brevity and clarity.

In one implementation, as shown in Figs. 2 and 3, the plurality of battery cells 20 are arranged around the air-cooling structure 30. By arranging the plurality of cylindrical battery cells 20 around the air-cooling structure 30, heat of each battery cell 20 can be effectively taken away by the air introduced into the air ducts 32, thereby improving the overall heat dissipation efficiency.

In an implementation, as shown in Figs. 2 and 3, the battery 10 further includes the box body 11, the box body 11 includes the first box body portion 111 and the second box body portion 112, the first box body portion 111 and the second box body portion 112 are buckled to form an accommodating cavity for accommodating the air-cooling structure 30 and the plurality of battery cells 20, at least one of the first box body portion 111 and the second box body portion 112 has an opening, and a plane where the opening is located is parallel to the first direction X. The box body 11 is arranged to be formed by the first box body portion 111 and the second box body portion 112 in a buckled mode, which facilitates the assembly of the air-cooling structure 30 and the plurality of battery cells 20 in the box body 11.

Since the plurality of battery cells 20 are accommodated in the accommodating space formed by the first box body portion 111 and the second box body portion 112 in the buckled mode, in an implementation, the first box body portion 111 and the second box body portion 112 may also be used for heat dissipation of the plurality of battery cells 20.

For example, a first heat dissipation portion 1110 is arranged on a bottom wall of the first box body portion 111, and a contour shape of a region on the first heat dissipation portion 1110 in contact with the plurality of battery cells 20 matches a contour shape of surfaces of the plurality of battery cells 20.

The first heat dissipation portion 1110 is of a profiling design, and a contour shape of a region on the first heat dissipation portion in contact with the plurality of battery cells 20 is designed to match the contour shape of the surfaces of the plurality of battery cells 20. The first heat dissipation portion 1110 may be a part of the bottom wall of the first box body portion 111, or may be a structure that is arranged on the bottom wall of the first box body portion 111 relatively independent from the first box body portion 111. As shown in Fig. 4, the first heat dissipation portion 1110 is a heat conducting plate arranged on the bottom wall of the first box body portion 111, a contour of a region on a surface of the heat conducting plate in contact with the plurality of battery cells 20 is in an arc shape, and a curvature of the arc is the same as curvatures of arcs at corresponding positions on the surfaces of the battery cells 20. In this way, the heat dissipation area of the battery cells 20 is enlarged. The black dashed arrows in Fig. 4 show the heat dissipation directions of the plurality of battery cells 20. Except the battery cells 20 located at both ends in the second direction Y, the heat dissipated by the other battery cells 20 can not only be taken away by the air introduced into the air ducts 32, but also be taken away through the bottom wall of the first box body portion 111, which further improves the heat dissipation efficiency.

For another example, a second heat dissipation portion 1120 is arranged on a bottom wall of the second box body portion 112, and a contour shape of a region on the second heat dissipation portion 1120 in contact with the plurality of battery cells 20 matches the contour shape of surfaces of the plurality of battery cells 20.

The second heat dissipation portion 1120 is of a profiling design, and a contour shape of a region on the second heat dissipation portion in contact with the plurality of battery cells 20 is designed to match the contour shape of the surfaces of the plurality of battery cells 20. The second heat dissipation portion 1120 may be a part of the bottom wall of the second box body portion 112, or may be a structure that is arranged on the bottom wall of the second box body portion 112 relatively independent from the second box body portion 112. As shown in Fig. 4, the bottom wall of the second box body portion 112 is directed towards the surfaces of the battery cells 20 to serve as the second heat dissipation portion 1120. A contour of a region on the second heat dissipation portion 1120 in contact with the plurality of battery cells 20 is in an arc shape, and a curvature of the arc is the same as curvatures of arcs at corresponding positions on the surfaces of the battery cells 20, thus enlarging the heat dissipation area of the battery cells 20. The black dashed arrows in Fig. 4 show the heat dissipation directions of the plurality of battery cells 20. Except the battery cells 20 located at both ends in the second direction Y, the heat dissipated by the other battery cells 20 can not only be taken away by the air introduced into the air ducts 32, but also be taken away through the bottom wall of the second box body portion 112, which further improves the heat dissipation efficiency.

In an implementation, as shown in Figs. 3 and 4, the plurality of battery cells 20 are pasted on a first surface 313 of the body 31 away from the air ducts 32 by means of a thermally conductive structural adhesive 34.

The thermally conductive structural adhesive 34 is used to realize the connection between the battery cells 20 and the air-cooling structure 30. In addition, since the thermally conductive structural adhesive 34 has good thermal conductivity, by pasting the plurality of battery cells 20 on the first surface 313 surrounding the air ducts 32 by means of the thermally conductive structural adhesive 34, it is beneficial to conducting the heat generated by the plurality of battery cells 20 to the air ducts 32, which further improves the heat dissipation efficiency.

In an implementation, a contour shape of a region on the first surface 313 of the body 31 to which the plurality of battery cells 20 are pasted matches the contour shape of surfaces of the plurality of battery cells 20.

For example, as shown in Fig. 3 to Fig. 5, the contour of the region on the first surface 313 of the body 31 to which the plurality of battery cells 20 are pasted is in an arc shape, and a curvature of the arc is the same as curvatures of arcs at corresponding positions on the surfaces of the battery cells 20, so that the contact area between the battery cells 20 and the first surface 313 is enlarged, and the heat dissipation area of the plurality of battery cells 20 is enlarged, which further improves the heat dissipation efficiency.

In an implementation, as shown in Fig. 3 to Fig. 5, a weight-reducing groove 312 is arranged on a region on the first surface 313 of the body 31 to which the plurality of battery cells 20 are not pasted.

Since the body 31 of the air-cooling structure 30 is usually made of metal materials such as aluminum materials, it has a relatively large weight, and the weight of the air-cooling structure 30 may be reduced by arranging the weight-reducing groove 312 on a non-heat-dissipation region on the body 31 not in contact with the battery cells 20. The present application does not limit the number and size of the weight-reducing groove 312, and 8 weight-reducing grooves are shown in Fig. 3 to Fig. 5.

In an implementation, the air-cooling structure 30 further includes a cover plate 33. The cover plate 33 and a first end portion 311 of the body 32 are fixed by first bolts 41. The first end portion 311 is the end portion where air outlets of the air ducts 32 in the first direction X are located, and may also be referred to as a rear portion of the air-cooling structure 30.

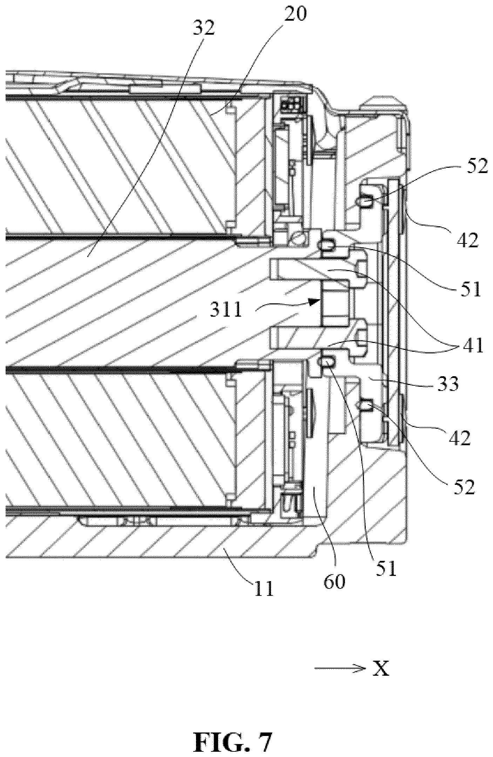

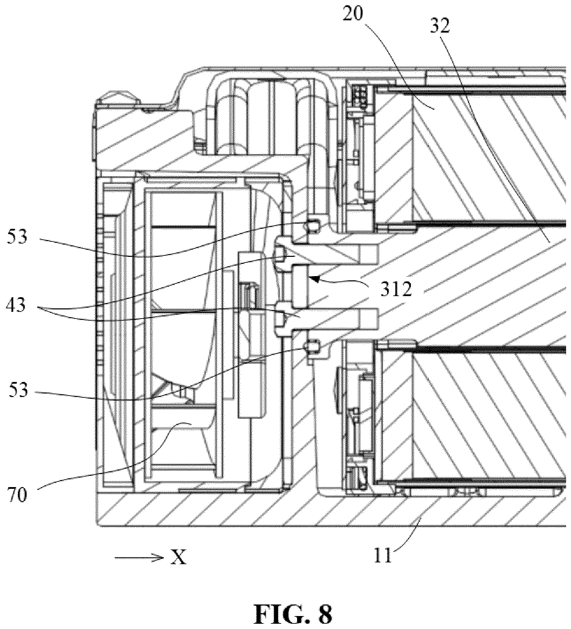

As shown in Figs. 7 and 8, the air-cooling structure 30 and the plurality of battery cells 20 are accommodated in the box body 11, the cover plate 33 is arranged on the end portion where the air outlets of the air-cooling structure 10 are located, and the cover plate 33 and the body 31 of the air-cooling structure 30 are assembled together through the first bolts 41. After the air-cooling structure 30 and the plurality of battery cells 20 are connected by the thermally conductive structural adhesive 34 to form a module, the module may be put into the box body 11 from the opening of the second box body portion 112, and then the cover plate 33 is fixed on the first end portion 311 of the body 31 through the first bolts 41. This not only meets the assembly requirements of the battery 10 to realize the assembly of the air-cooling structure 30 and the plurality of battery cells 20 in the case 11, but also seals the plurality of battery cells 20 through the cover plate 33.

In an implementation, as shown in Fig. 7, a first sealing member 51 is arranged between the cover plate 33 and the first end portion 311 of the body 31. Through the first sealing member 51, the sealing between the cover plate 33 and the body 31 may be realized at the air outlets, so that the battery cells 20 are located in a closed space, and the air tightness requirement of the battery cells 20 is ensured.

In an implementation, as shown in Fig. 7, a second sealing member 52 is arranged between the cover plate 33 and the box body 11. Through the second sealing member 52, the sealing between the cover plate 33 and the box body 11 may be realized at the air outlets, so that the battery cells 20 are located in a closed space, and the air tightness requirement of the battery cells 20 is ensured.

It can be seen that, at the air outlets, the first sealing member 51 is configured to seal the cover plate 33 and the air-cooling structure 30, and the second sealing member 52 is configured to seal the cover plate 33 and the box body 11, so that after the plurality of battery cells 20 are arranged around the air-cooling structure 30, they can be located in the closed space formed by the case 11, the cover plate 33 and the air-cooling structure 30, so as to ensure the air tightness requirement of the battery cells 20.

In an implementation, as shown in Fig. 7, a gap 60 exists between the cover plate 33 and end faces of the plurality of battery cells 20. The gap 60 between the cover plate 33 and the end faces of the battery cells 20 can be designed according to assembly requirements, and the gap 60 is configured to leave an enough space for the automatic assembly of the battery 10.

In an implementation, a second end portion 312 of the body 32 of the air-cooling structure 30 and the box body 11 are fixed through second bolts 42. The second end portion 312 is the end portion where air inlets of the air ducts in the first direction X are located, and may also be referred to as a front portion of the air-cooling structure.

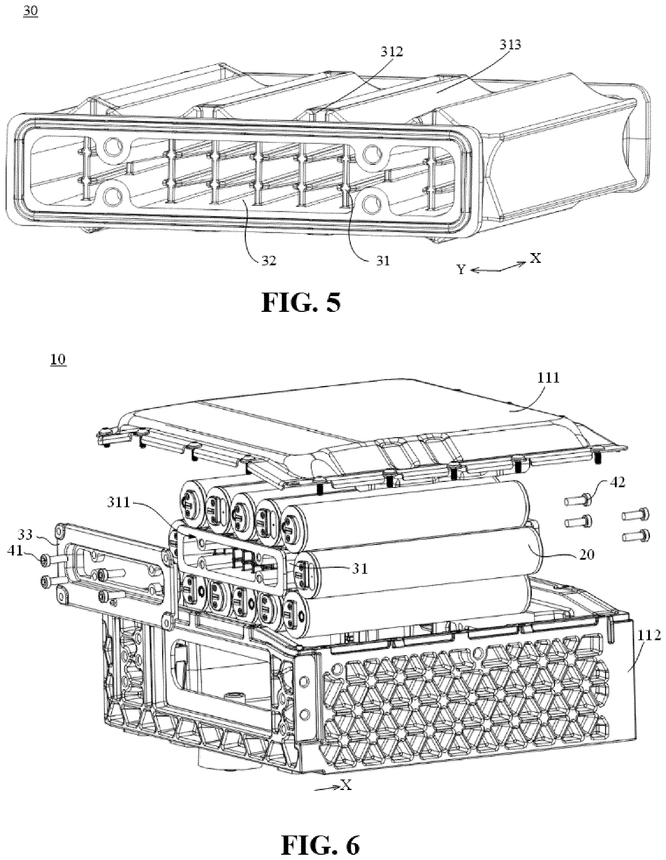

As shown in Figs. 6 and 8, the air-cooling structure 30 and the plurality of battery cells 20 are accommodated in the box body 11, and the box body 11 and the body 31 of the air-cooling structure 30 are assembled together through the second bolts 42. After the air-cooling structure 30 and the plurality of battery cells 20 are connected by the thermally conductive structural adhesive 34 to form a module, the module may be put into the box body 11 from the opening of the second box body portion 112, and then the second end portion 312 of the body 31 and the box body 11 are fixed through the second bolts 42. This not only meets the assembly requirements of the battery 10 to realize the assembly of the air-cooling structure 30 and the plurality of battery cells 20 in the case 11, but also seals the plurality of battery cells 20.

In an implementation, as shown in Fig. 8, a third sealing member 53 is arranged between the second end portion 312 of the body 31 and the box body 11. Through the third sealing member 53, the sealing between the box body 11 and the air-cooling structure 30 may be realized at the air inlets, so that the battery cells 20 are located in a closed space, and the air tightness requirement of the battery cells 20 is ensured.

In an implementation, the air-cooling structure 30 further includes a fan 70, and the fan 70 is configured to ventilate the air ducts 32, so as to discharge the heat generated by the plurality of battery cells 20. The fan 70 can increase the air speed in the air ducts 32, thereby improving the heat dissipation efficiency of the battery cells 20.

As shown in Fig. 8, the fan 70 is arranged at the air inlets. The fan 70 is, for example, an axial flow fan, which is configured to generate cold air along the first direction X. When the cold air passes through the air ducts 32, the heat generated by the battery cells 20 can be taken out from the inside of the battery 10 to lower the temperature of the battery 10.

An example of the present application further provides powered equipment, and the powered equipment may include the battery 10 in the foregoing examples, so that electrical energy is provided for the powered equipment.

The battery 10 of the foregoing examples is arranged in the powered equipment, in the battery 10, a plurality of cylindrical battery cells 20 are arranged around an air-cooling structure 30, the air-cooling structure 30 includes a body 31 and air ducts 32 penetrating the body 31 along an axial direction, i.e., a first direction X, of the battery cells, air introduced into the air ducts can take away heat generated by the plurality of battery cells 20, and good heat dissipation performance is achieved, so that the battery 10 has high safety, and popularization and use of the powered equipment are facilitated.

The battery 10 and the powered equipment 1 of the examples of the present application are described above, and a manufacturing method 300 and a manufacturing device 400 of the battery 10 of the examples of the present application will be described below. For the parts not described in detail, reference may be made to the foregoing examples.

Fig. 9 shows a schematic flow chart of a method 300 for manufacturing a battery 10 according to an example of the present application. As shown in Fig. 9, the manufacturing method 300 includes: step 310, providing a plurality of battery cells 20, the plurality of battery cells 20 being cylinders; step 320, providing an air-cooling structure 30, the air-cooling structure 30 including a body 31 and at least one air duct 32 penetrating the body 31; and step 330, arranging the at least one air duct 32 along a first direction X, the first direction X being parallel to an axial direction of the plurality of battery cells 20, and a cross section of the air duct 32 perpendicular to the first direction X is in a fin shape.

Fig. 10 shows a schematic block diagram of a device 400 for manufacturing a battery 10 according to an example of the present application. As shown in Fig. 10, the manufacturing device 400 includes: a first providing module 410 configured to provide a plurality of battery cells 20, the plurality of battery cells 20 being cylinders; a second providing module 420 configured to provide an air-cooling structure 30, the air-cooling structure 30 including a body 31 and at least one air duct 32 penetrating the body 31; and an assembling module 430 configured to arrange the at least one air duct 32 along a first direction X, the first direction X being parallel to an axial direction of the plurality of battery cells 20, and a cross section of the air duct 32 perpendicular to the first direction X is in a fin shape.

While the present application has been described with reference to the preferred examples, various modifications may be made and components therein may be replaced with equivalents without departing from the scope of the present application. In particular, the technical features mentioned in the various examples can be combined in any manner provided that there is no structural conflict. The present application is not limited to the specific examples disclosed herein, but rather includes all technical solutions falling within the scope of the claims.

## Claims

1. A battery (10), comprising:
a plurality of battery cells (20), the plurality of battery cells (20) being cylinders; and
an air-cooling structure (30), comprising a body (31) and at least one air duct (32) penetrating the body (31) in a first direction (X), the first direction (X) being parallel to an axial direction of the plurality of battery cells (20), and a cross section of the air duct (32) perpendicular to the first direction (X) being in a fin shape.

2. The battery (10) according to claim 1, wherein the plurality of battery cells (20) are arranged around the air cooling structure (30).

3. The battery (10) according to claim 1 or 2, wherein the plurality of battery cells (20) are pasted on a first surface (313) of the body (31) away from the air duct (32) by means of a thermally conductive structural adhesive (34).

4. The battery (10) according to claim 3, wherein a contour shape of a region on the first surface (313) to which the plurality of battery cells (20) are pasted matches a contour shape of surfaces of the plurality of battery cells (20).

5. The battery (10) according to any one of claims 1 to 4, wherein the air-cooling structure (30) further comprises a fan (70), and the fan (70) is configured to ventilate the air duct (32), so as to discharge the heat generated by the plurality of battery cells (20).

6. The battery (10) according to any one of claims 1 to 5, wherein the battery (10) further comprise a box body (11), the box body (11) comprises a first box body portion (111) and a second box body portion (112), the first box body portion (111) and the second box body portion (112) are buckled to form an accommodating cavity for accommodating the air-cooling structure (30) and the plurality of battery cells (20), at least one of the first box body portion (111) and the second box body portion (112) has an opening, and a plane where the opening is located is parallel to the first direction (X).

7. The battery (10) according to claim 6, wherein a first heat dissipation portion (1110) is arranged on a bottom wall of the first box body portion (111), and a contour shape of a region on the first heat dissipation portion (1110) in contact with the plurality of battery cells (20) matches the contour shape of surfaces of the plurality of battery cells (20).

8. The battery (10) according to claim 6 or 7, wherein a second heat dissipation portion (1120) is arranged on a bottom wall of the second box body portion (112), and a contour shape of a region on the second heat dissipation portion (1120) in contact with the plurality of battery cells (20) matches the contour shape of surfaces of the plurality of battery cells (20).

9. The battery (10) according to any one of claims 1 to 8, wherein the air-cooling structure (30) is formed by a die-casting process.

10. Powered equipment, comprising the battery (10) according to any one of claims 1 to 9, the battery (10) being configured to provide electrical energy to the powered equipment.

11. A method (300) for manufacturing a battery (10), comprising:
providing a plurality of battery cells (20), the plurality of battery cells (20) being cylinders;
providing an air-cooling structure (30), the air-cooling structure (30) comprising a body (31) and at least one air duct (32) penetrating the body (31); and
arranging the at least one air duct (32) in a first direction (X), the first direction (X) being parallel to an axial direction of the plurality of battery cells (20), and a cross section of the air duct (32) perpendicular to the first direction (X) being in a fin shape.

12. A device (400) for manufacturing a battery (10), comprising:
a first providing module (410) configured to provide a plurality of battery cells (20), the plurality of battery cells (20) being cylinders;
a second providing module (420) configured to provide an air-cooling structure (30), the air-cooling structure (30) comprising a body (31) and at least one air duct (32) penetrating the body (31); and
an assembling module (430) configured to arrange the at least one air duct (32) in a first direction (X), the first direction (X) being parallel to an axial direction of the plurality of battery cells (20), and a cross section of the air duct (32) perpendicular to the first direction (X) being in a fin shape.
